# EUROPEAN PATENT APPLICATION

(11) **EP 2 317 242 A2**
(43) Date of publication of application: **04.05.2011**
(21) Application number: 10188899.8
(22) Date of filing: 26.10.2010
(51) Int. Cl.: F24J 2/10, F24J 2/16, F24J 2/18

(54) **Solid linear solar concentrator optical system with micro-faceted mirror array**

(30) Priority: 03.11.2009 US 611720
(71) Applicant: Palo Alto Research Center Incorporated, Palo Alto, California 94304 (US)
(72) Inventor: Maeda, Patrick Y, Mountain View, CA 94040 (US); Cheung, Patrick C, Castro Valley, CA 94552 (US); Schmaelzle, Philipp H, Los Altos, CA 94024 (US)
(74) Representative: Skone James, Robert Edmund

(57) **Abstract**

A concentrating solar collector (100) includes a solid optical structure a flat front surface (112), and PV cells (120-1,120-2) and a micro-faceted mirror array (130-1,130-2,130-3) disposed on the opposing rear surface (115). The micro-faceted mirrors are arranged in a sawtooth arrangement to reflect sunlight toward the front surface (112) at angles that produces total internal reflection (TIR) and redirection of the sunlight onto the PV cells. The micro-faceted mirror array (130) reflects sunlight onto the PV cells (120) in an extended focus region of concentrated light that has a substantially uniform or homogeneous irradiance distribution pattern. The optical structure is a solid dielectric sheet either processed to include micro-faceted surfaces with reflective material formed thereon, or having a dielectric film including the micro-faceted mirror array adhered thereon. In one embodiment, three PV cells and four micro-faceted mirror arrays are disposed in an interleaved pattern with two side mirrors are disposed on side edges of the optical structure.

## Description

This invention relates to solar power generators, more particularly to concentrating solar collectors.

Photovoltaic solar energy collection devices used to generate electric power generally include flat-panel collectors and concentrating solar collectors. Flat collectors generally include photovoltaic cell arrays and associated electronics formed on semiconductor (e.g., monocrystalline silicon or polycrystalline silicon) substrates, and the electrical energy output from flat collectors is a direct function of the area of the array, thereby requiring large, expensive semiconductor substrates. Concentrating solar collectors reduce the need for large semiconductor substrates by concentrating light beams (i.e., sun rays) using, e.g., a parabolic reflectors or lenses that focus the beams, creating a more intense beam of solar energy that is directed onto a small photovoltaic cell. Thus, concentrating solar collectors have an advantage over flat-panel collectors in that they utilize substantially smaller amounts of semiconductor.

A problem with conventional concentrating solar collectors is that they are expensive to produce, operate and maintain. The reflectors and/or lenses used in conventional collectors to focus the light beams are produced separately, and must be painstakingly assembled to provide the proper alignment between the focused beam and the photovoltaic cell. Further, over time, the reflectors and/or lenses can become misaligned due to thermal cycling or vibration, and become dirty due to exposure to the environment. Maintenance in the form of cleaning and adjusting the reflectors/lenses can be significant, particularly when the reflectors/lenses are produced with uneven shapes that are difficult to clean.

Another problem associated with conventional trough-type and cassegrain-type concentrating solar collectors is that they typically include at least structure (e.g., a mirror or a PV cell) disposed over the light receiving surface that creates a shading effect, which in turn reduces the peak power output that can be obtained by conventional concentrating solar collectors.

What is needed is a concentrating solar collector that avoids the shading issue, expensive assembly and maintenance costs associated with conventional concentrating solar collectors.

The present invention is directed to a concentrating solar collector including a solid, light-transparent optical structure having a substantially flat front surface through which solar radiation (sunlight) is directed either onto a solar energy collection element (e.g., a PV cell) or a micro-faceted mirror array that substantially entirely cover the opposing rear surface of the optical structure. That is, the PV cells are respectively disposed on receiver surface regions of the rear surface, and a micro-faceted mirror array covers the remaining (reflective) surface region of the rear surface, such that all of the solar radiation passing through the front surface either directly strikes the PV cells, or is reflected, redirected and concentrated or focused by the micro-faceted mirror array onto the PV cells. The micro-faceted mirror array includes multiple micro-faceted mirrors arranged predetermined angles relative to the front surface such sunlight is reflected toward the front surface of the optical element at an angle that produces total internal reflection (TIR) of the sunlight from the front surface, and directs the re-reflected sunlight onto one of the PV cells. With this arrangement, substantially all solar radiation entering the optical element is either directed onto the solar cells, or reflected by the micro-faceted mirror array onto the solar cells, thereby providing a highly efficient concentrating solar collector having no shaded regions.

According to an embodiment of the present invention, the micro-faceted mirrors of the micro-faceted mirror array are arranged in a sawtooth pattern such that left-leaning mirror facets are angled to reflect sunlight in a first (e.g., leftward) direction, and right-leaning mirror facets are angled to reflect sunlight in a substantially opposite (e.g., rightward) direction. The sawtooth pattern is arranged such that each left-leaning micro-faceted mirror shares a common lower edge with an adjacent right-leaning micro-faceted mirror, and shares a common upper edge with another adjacent right-leaning micro-faceted mirror. By setting the angle of the mirrors such that the sunlight reflected from each mirror facet is not blocked by an adjacent "tooth" If of the sawtooth arrangement, and by providing sharp corners at the upper and lower common edges, this sawtooth arrangement eliminates the type of blocking/shading by adjacent facets associated with Fresnel type optical surfaces, thus allowing substantially all of the sunlight to directed on to the micro-faceted mirror array to be reliably redirected onto the PV cells.

According to another embodiment of the present invention, the micro-faceted mirror array used to reflect, redirect, and concentrate the sunlight has a very small feature height and associated differential thickness that make the mirror surface much easier and less expensive to mold or form than the curves surfaces associated with trough or cassegrain reflectors.

According to another embodiment of the present invention, the mirrors of the micro-faceted mirror array are arranged such that reflected sunlight is directed onto the PV cells in an extended focus region of concentrated light that has a substantially uniform or homogeneous irradiance distribution. This arrangement reduces the I²R series resistance associated losses due to smaller current density levels generated by large peaks in the irradiance distribution on the PV cells. This type of optical system reduces the peak concentration by a factor of - 10X to 20X relative to a conventional system. In various specific embodiments, the mirrors of the micro-faceted mirror array are provided with either flat, curved or sub-faceted shapes to produce the desired irradiance distribution of the concentrated light on the PV cells.

According to another aspect of the present invention, the optical structure is a solid dielectric (e.g., plastic or glass) sheet, with the PV cells and micro-faceted mirror array mounted or otherwise formed directly on and facing into the rear surface of the dielectric sheet. Because the optical structure is solid (i.e., because the front and rear surfaces remain fixed relative to each other), the PV cells and micro-faceted mirror array remain permanently aligned and spaced from the front surface, thus maintaining optimal optical operation while minimizing maintenance costs. Moreover, the loss of light at gas/solid interfaces is minimized because only solid optical structure material (e.g., low-iron glass) is positioned between the micro-faceted mirror array, the front surface and the PV cells. In accordance with a specific embodiment, the reflective surface regions of the rear surface are processed to include micro-faceted surfaces, and the micro-faceted mirror array is formed by a reflective mirror material (e.g., silver, aluminum or other suitable reflective metal) film that is directly formed (e.g., deposited or plated) onto the micro-faceted surfaces. By carefully processing the micro-faceted surfaces on the optical structure, the micro-faceted mirror array is essentially self-forming and self-aligned when formed as a mirror material film, thus greatly simplifying the manufacturing process and minimizing production costs. In another specific embodiment, the rear surface of the optical structure is substantially flat and parallel to the front surface, and the micro-faceted mirror array is formed on a light transparent dielectric film using a modified version of known LCD fabrication techniques, and then laminating the film to the optical structure, e.g., using an adhesive.

According to another specific embodiment of the present invention, the concentrating solar collector includes multiple (e.g., three) PV cells and multiple (e.g., four) micro-faceted mirror arrays disposed in an interleaved pattern on the solid optical structure, and two side mirrors are disposed on side edges of the optical structure. The outside pair of micro-faceted mirror arrays are arranged to reflect light either toward the front surface for redirection by TIR onto an a selected PV cell, or onto an adjacent one of the side mirrors, which re-reflects the light toward the front surface, from which it is again re-reflected onto a selected PV cell. The central micro-faceted mirror arrays are arranged to reflect light to any number (e.g., three) of the PV cells, the particular PV cell being determined for each mirror by the angle required to reflect the light by TIR. This arrangement facilitates the production of concentrating solar collectors that have any desired length and associated power production, and minimizes the loss of light received along the outside edges of the optical structure, thus further enhancing efficiency.

These and other features, aspects and advantages of the present invention will become better understood with regard to the following description, appended claims, and accompanying drawings, where:

Fig. 1 is a perspective view showing a concentrating solar collector according to an embodiment of the present invention;

Fig. 2 is a simplified diagram showing a sawtooth micro-faceted mirror arrangement utilized by the concentrating solar collector of Fig. 1 according to a specific embodiment of the present invention;

Figs. 2A, 2B, 2C, 2D and 2E are sub-diagrams showing respective portions of the sawtooth micro-faceted mirror arrangement of Fig. 2 in additional detail;

Fig. 2F is a table showing the coordinates of the sawtooth micro-faceted mirror arrangement of Fig. 2 in additional detail;

Figs. 3(A), 3(B), 3(C) and 3(D) are simplified cross-sectional perspective views showing alternative mirror shapes associated with micro-faceted mirror arrangements according to alternative embodiments of the present invention;

Fig. 4 is an exploded perspective view showing a concentrating solar collector according to another embodiment of the present invention;

Fig. 5(A) is an exploded perspective view showing a concentrating solar collector according to another embodiment of the present invention;

Fig. 5(B) is an exploded perspective view showing a concentrating solar collector according to another embodiment of the present invention;

Fig. 6 is an exploded perspective view showing a concentrating solar collector according to another embodiment of the present invention;

Fig. 7 is a simplified side view showing the concentrating solar collector of Fig. 6 during operation;

Fig. 8 is a simplified side view showing a concentrating solar collector according to another embodiment of the present invention;

Figs. 9(A) and 9(B) are perspective views showing optical structures for concentrating solar collectors according to alternative embodiments of the present invention; and

Fig. 10 is a simplified side view showing a concentrating solar collector according to another embodiment of the present invention.

The present invention relates to an improvement in concentrating solar collectors. The following description is presented to enable one of ordinary skill in the art to make and use the invention as provided in the context of a particular application and its requirements. As used herein, directional terms such as "front", "rear", "side", "over", "under", "right", "left", "rightward", "leftward", "upper", "lower", "above" and "below" are intended to provide relative positions for purposes of description, and are not intended to designate an absolute frame of reference. In addition, the phrase "solid, single-piece" is used herein to describe a singular molded or machined structure, as distinguished from multiple structures that are produced separately and then joined by way of, for example, adhesive, fastener, clip, or movable joint. Various modifications to the preferred embodiment will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed.

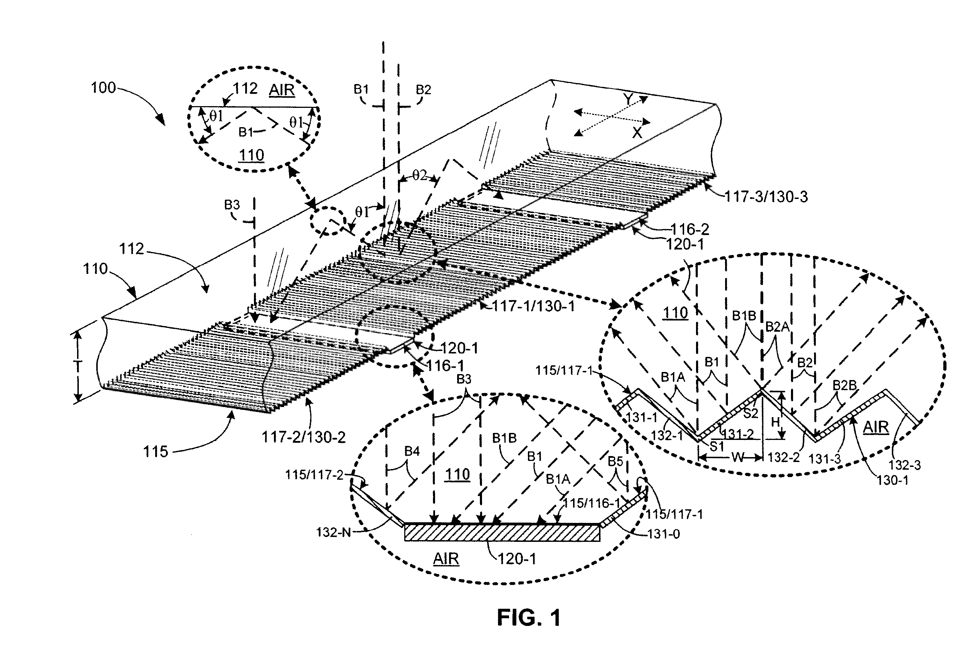

Fig. 1 shows a portion of a concentrating solar collector 100 including an optical structure 110, two photovoltaic (PV) cells (solar energy collection elements) 120-1 and 120-2, and three micro-faceted mirror arrays 130-1, 130-2 and 130-3. During operation, concentrating solar collector 100 is oriented using known techniques such that solar radiation (sunlight) is directed substantially perpendicularly through front surface 112 into optical structure 110, as indicated by the dashed line arrows B1, B2 and B3.

According to an aspect of the present invention, optical structure 110 is a solid, single-piece, light-transparent (e.g., low-iron glass, clear plastic or other clear dielectric solid) structure having a substantially flat (planar) front surface 112 and an opposing rear surface 115. As used herein the phrase "substantially flat" is intended to mean that the surface features allow parallel light to pass through any portion of front surface 112 without significant refraction. Lower surface 115 is separated into several regions that are designated herein as light reflective surface regions that are utilized to reflect light back toward front surface 112 in the manner described below, which light that support PV cells, and light receiver surface regions that are covered by micro-faceted mirrors. In particular, lower surface 115 includes a (first) reflector surface region 117-1 disposed between a (first) receiver surface region 116-1 and a (second) receiver surface region 116-2, a (second) reflector surface region 117-2 separated from reflector surface region 117-1 by receiver surface region 116-1, and a (third) reflector surface region 117-3 separated from reflector surface region 117-1 by receiver surface region 116-2. As indicated by specific embodiments described below, the size of optical structure 110 is scalable and repeatable in either of the lengthwise (y-axis) direction and the widthwise (x-axis) direction in order to increase solar power generation.

As indicated in Fig. 1, PV cells 120-1 and 120-2 are respectively optically coupled to receiver surface regions 116-1 and 116-2 (i.e., no air gap or gas-filled gap) using known techniques (e.g., by way of a light transparent adhesive) such that solar radiation directed onto receiver surface regions 116-1 and 116-2 passes through to PV cells 120-1 and 120-2. Optical coupling of PV cells 120-1 and 120-2 is important for achieving passage of light through receiver surface regions 116-1 and 116-2 (i.e., if an air gap exists between receiver surface regions 116-1 and 116-2 and PV cells 120-1 and 120-2, then undesirable TIR may occur when the light strikes receiver surface regions 116-1 and 116-2). PV cells 120-1 and 120-2 are substantially rectangular and elongated structures that preferably entirely cover receiver surface regions 116-1 and 116-2. As set forth below, PV cells 120-1 and 120-2 are preferably PV cells designed with contact metallization grids that minimize optical losses, resistive losses, and can handle the currents arising form concentrated sunlight, but may also be PV cells designed for use in unconcentrated sunlight. PV cells 120-1 and 120-2 may comprise integral chips (die) that are sized and shaped to cover receiver surface regions 116-1 and 116-2, or may comprise multiple smaller chips arranged and connected according to known techniques. PV cells 120-1 and 120-2 are electrically connected by way of wires or other connectors (not shown) to form a desired circuit according to known techniques.

Micro-faceted mirror arrays 130-1, 130-2 and 130-3 are respectively disposed under reflector surface regions 117-1, 117-2 and 117-3, and face upward into optical structure 110 such that sunlight passing through front surface 112 and directed onto any of reflector surface regions 117-1, 117-2 and 117-3 is reflected by a corresponding one of micro-faceted mirror arrays 130-1, 130-2 and 130-3 back toward front surface 112. Micro-faceted mirror arrays 130-1, 130-2 and 130-3 are arranged and formed using the alternative methods described below.

According to an aspect of the present invention, PV cells 120-1 and 120-2 and micro-faceted mirror arrays 130-1, 130-2 and 130-3 substantially entirely cover rear surface 115 of the optical structure 110 such that substantially all of the sunlight directed into optical structure 110 through front surface 112 either shines directly onto one of PV cells 120-1 and 120-2, or is reflected by one of micro-faceted mirror arrays 130-1, 130-2 and 130-3. The terms "substantially entirely covers" and "substantially all of the sunlight" are intended to mean that the area amount of rear surface 115 that serves neither the reflection nor solar energy receiving functions, such as regions where sunlight is lost due to edge effects and manufacturing imperfections, is minimized (e.g., less than 5%) in order to maximize the amount of sunlight converted into usable power. As set forth in additional detail below, by substantially entirely covering rear surface 115 with PV cells 120-1 and 120-2 and micro-faceted mirror arrays 130-1, 130-2, the present invention provides an advantage over conventional concentrating solar collectors by eliminating shaded regions, thereby facilitating the conversion of substantially all sunlight entering optical structure 110.

According to another aspect of the invention, each micro-faceted mirror array 130-1, 130-2 and 130-3 includes multiple micro-faceted mirrors arranged such that solar radiation is reflected toward front surface 112 at an angle that causes said reflected solar radiation to be re-reflected by total internal reflection (TIR) from front surface 112 onto one of PV cells 120-1 and 120-2 (i.e., through an associated one of receiver surface regions 116-1 and 116-2). For example, a sunlight beam B1 entering optical structure 110 through front surface 112 and directed onto mirror array 130-1 is reflected by a micro-faceted mirror of mirror array 130-1 (e.g., micro-faceted mirror 131-2, shown in the dashed line bubble located on the right side of Fig. 1, which shows a portion of optical structure 110 in cross-section) at an angle θ1 toward front surface 112, with angle θ1 being selected such that beam B1 is both subjected to total internal reflection (TIR) when it encounters front surface 112 (e.g., as indicated in the small dashed-line bubble located at the upper portion of Fig. 1), and is re-reflected from front surface 112 onto PV cell 120-1 through receiver surface region 116-1 (as indicated in the lowermost bubble of Fig. 1). Similarly, a sunlight beam B2 entering through front surface 112 and directed onto mirror array 130-1 is reflected by another micro-faceted mirror (e.g., micro-faceted mirror 132-2, see rightmost bubble in Fig. 1) at an angle θ2 toward front surface 112, with angle θ2 also being selected such that beam B2 is subjected to TIR and is re-directed onto PV cell 120-2 through receiver surface region 116-2. As explained in additional detail below, angles θ1 and θ2 may be equal in magnitude, but are typically different to achieve the goals of TIR and re-direction onto a selected PV cell. Sunlight beams passing through any point of front surface 112 and directed onto any of mirror arrays 130-1, 130-2 or 130-3 are similarly reflected and redirected onto a selected PV cell. Note that sunlight beams passing through any point of front surface 112 and directed onto one of the PV cells, such as beam B3 that is shown in Fig. 1 as being directed onto PV cell 120-1, are directly converted to usable power. Because substantially all solar beams directed into optical structure 110 either directly enter a PV cell or are reflected onto a PV cell, concentrating solar collector 100 facilitates the conversion of substantially all sunlight entering optical structure 110, thereby providing a highly efficient concentrating solar collector having no shaded or otherwise non-productive regions.

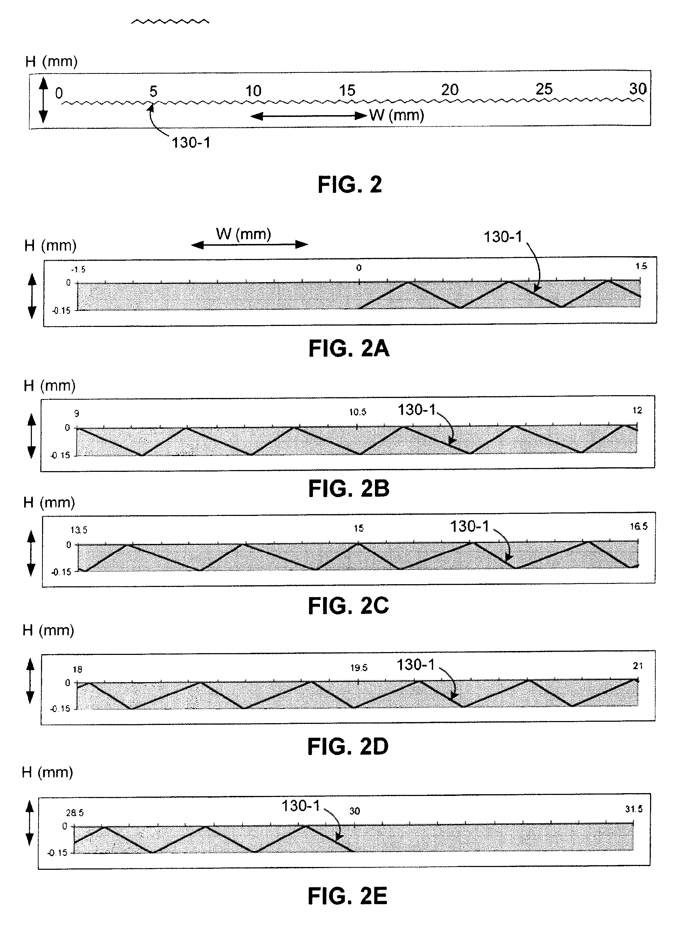

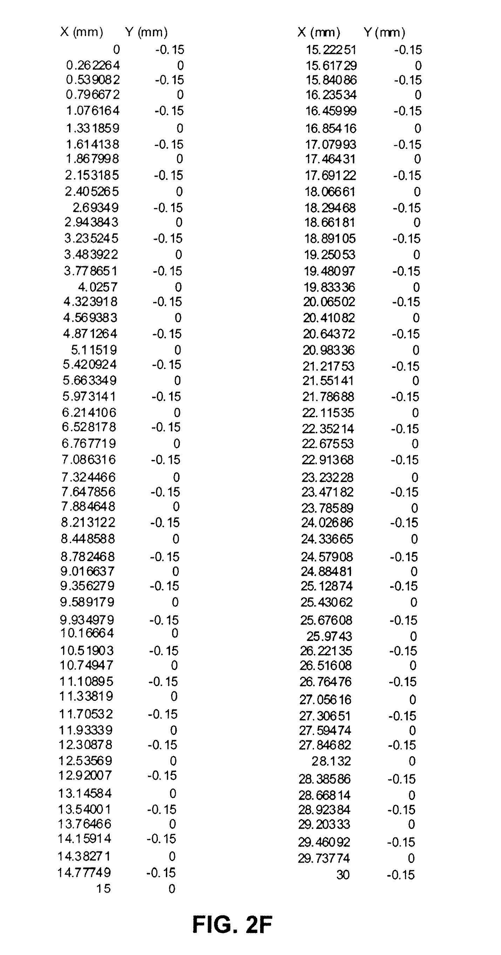

According to an embodiment of the present invention, the micro-faceted mirrors of each micro-faceted mirror array 130-1, 130-2 and 130-3 are arranged in a continuous sawtooth pattern that minimizes interference of the reflected beams. In particular, referring to the rightmost bubble in Fig. 1, micro-faceted mirror array 130-1 includes a continuous mirror surface that is formed into two groups of micro-faceted mirrors: a left-leaning (first) group including mirror facets 131-1, 131-2 and 131-3, and a right-leaning (second) group including mirror facets 131-1, 131-2 and 131-3. Left-leaning mirror facets 131-1, 131-2 and 131-3 are angled in a left-facing (first) angular orientation (but not necessarily at the same angle) such that solar radiation is reflected by mirror facets 131-1, 131-2 and 131-3 in the manner described above toward the left in Fig. 1 (e.g., onto PV cell 120-1, onto another PV cell located in the direction of PV cell 120-1, or onto a side mirror located to the left of mirror facet 131-1 for redirection to a PV cell located to the right of mirror 132-3, as described in additional detail below). Similarly, right-leaning mirror facets 132-1, 132-2 and 132-3 are angled in a right-facing (second) angular orientation (i.e., generally in the opposing angular half-space relative to the left-facing angular orientation) such that solar radiation is reflected by mirror facets 132-1, 132-2 and 132-3 in the manner described above toward the right in Fig. 1 (e.g., onto PV cell 120-2, onto another PV cell located in the direction of PV cell 120-2, or onto a side mirror located to the right of mirror 132-3 for redirection to a PV cell located to the left of mirror 131-1). Note that each micro-faceted mirror shares a common upper (first) edge with a first adjacent micro-faceted mirror, and common lower (second) edge with a second adjacent micro-faceted mirror. For example, as indicated in the rightmost bubble in Fig. 1, left-leaning mirror facet 131-2 shares an upper common edge S1 (which extends into the plane of the drawing sheet) with adjacent right-leaning mirror facet 132-1, and shares a common lower edge S2 (which also extends into the plane of the drawing sheet) with adjacent right-leaning mirror facet 132-2. Note also that the sawtooth pattern is arranged such that solar radiation reflected from any point on each micro-faceted mirror is not impeded by an adjacent micro-faceted mirror. For example, as indicated by the dashed lined arrows in the rightmost bubble, parallel sunlight beams B1A, B1 and B1B, which are respectively directed onto the lower, middle and upper portions of left-leaning mirror facet 131-2, are directed upward without being impeded by the "tooth" located to the left of mirror facet 131-2 (e.g., by mirror facet 132-1). Similarly, parallel sunlight beams B2A, B2 and B2B, which are respectively directed onto the upper, middle and lower portions of right-leaning mirror facet 132-2, are directed upward without being impeded by the "tooth" located to the right of mirror facet 132-2 (e.g., by mirror facet 131-3). An exemplary sawtooth pattern utilized in the formation of mirror array 130-1 is shown in Fig. 2, with Figs. 2A, 2B, 2C, 2D and 2E showing enlarged sections of mirror array 130-1 in additional detail. Fig. 2F contains the coordinates of the sawtooth pattern. By utilizing an essentially "seamless" sawtooth mirror arrangement in which reflected sunlight is not impeded by adjacent mirror facets, such as that shown in Fig. 2, concentrating solar collector 100 facilitates the reflection of substantially all of the sunlight directed onto micro-faceted mirror arrays 130-1, 130-2 and 130-3 to be reliably redirected onto PV cells 120-1 and 120-2.

According to another aspect, the mirror facets of micro-faceted mirror arrays 130-1, 130-2 and 130-3 are arranged such that reflected sunlight is directed onto the PV cells 120-1 and 120-2 in an extended focus region of concentrated light that has a substantially uniform or homogeneous irradiance distribution. For example, as indicated in the lower-center bubble in Fig. 1, the sunlight beams reflected by each mirror facet (e.g., reflected sunlight beams B1A, B1 and B1B) may be directed along parallel paths such that they arrive at receiver surface region 116-1 in a collimated state. This type of beam minimizes the peak concentration on the PV cell 120-1 which minimizes the I²R resistance or ohmic losses generated by high current densities in PV cell 120-1. In addition, this type of beam minimizes the light concentration in the transparent dielectric material which can help minimize material degradation and extend lifetime. In an alternative embodiment, sunlight beams B1A, B1 and B1B are reflected in divergent paths, or directed in converging paths that are not focused on a line when the beams arrive at PV cell 120-1. In another embodiment, the desired substantially uniform or homogeneous irradiance distribution pattern is achieved by directing beams from different mirror facets onto different regions of the PV cells, whereby the sunlight reflected by a group of micro-faceted mirrors is spread over the surface of a targeted PV cell. This type of beam arrangement reduces the I²R series resistance associated losses due to smaller current density levels generated in PV cell 120-1. Although substantially uniform or homogeneous irradiance distribution patterns are presently preferred, the appended claims are not intended to be limited to substantially uniform or homogeneous irradiance distribution patterns unless this limitation is specifically recited.

According to another aspect of the present invention, any sunlight rays directed onto the mirror facets of micro-faceted mirror arrays 130-1, 130-2 and 130-3 that are directed parallel to the lengthwise direction of the mirror facets (i.e., in a plane parallel to the X-direction and normal to the Y-direction in Fig. 1) are also directed onto the collector's solar cell. That is, both normal and non-normal beams that in an X-axis parallel, Y-axis normal plane and directed onto front surface 112 are reflected in substantially the same way by micro-faceted mirror arrays 130-1, 130-2 and 130-3 onto an associated PV cell 120-1 and 120-2. That is, any incoming beam that lies in an X-axis parallel, Y-axis normal plane, but is incident on front surface 112 at less than a 90 degree angle, is still reflected by a given mirror facet at the same angle, but because of the non-normal incident angle, will strike the associated PV cell 120-1 or 120-2 at a position displaced in the X-axis direction. This property makes linear concentrating solar collectors formed in accordance with the present invention especially suited to use with an azimuth rotation tracking based system such as that disclosed in EP-A-2221553 incorporated herein by reference in its entirety.

According to an embodiment of the present invention, micro-faceted mirror array 130-1 includes very small feature height and associated differential thickness that make the mirror surface much easier and less expensive to mold or form than the curves surfaces associated with trough-type or cassegrain-type concentrating solar collectors. As indicated by the measuring lines in Fig. 2, in the exemplary embodiment each mirror facet 131 and 132 (e.g., mirror 131-2, shown in Fig. 1) has width W in the range of approximately 0.1 to 0.4 mm, and a nominal height H of approximately 0.15 mm. With mirror facets having these dimensions, optical element 110 can be fabricated using a dielectric sheet having a nominal thickness T (shown in Fig. 1) of approximately 10 mm, which further facilitates minimizing the overall manufacturing cost of concentrating solar collector 100. In other embodiments, mirror facets having widths in the range of 0.03 to 50 mm and nominal heights in the range of 0.01 to 20 mm are used to produce concentrating solar collectors that achieve adequate overall manufacturing costs.

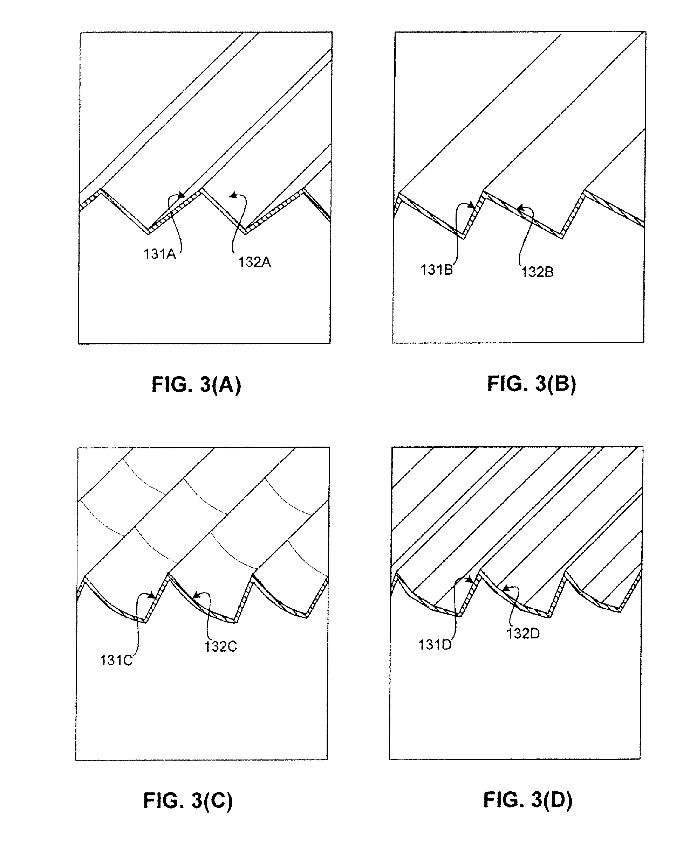

Figs. 3(A), 3(B), 3(C) and 3(D) are simplified cross-sectional perspective side views showing exemplary mirror facet shapes for producing various substantially uniform or homogeneous irradiance distribution patterns according to various alternative embodiments of the present invention. Fig. 3(A) shows a first triangular sawtooth pattern in which flat (straight) alternating mirror facets 131A and 132A are inclined as described above to avoid interference from adjacent "teeth". Fig. 3(B) shows a second triangular sawtooth pattern in which the reflective surfaces of mirror facets 131B are somewhat shorter than the reflective surfaces of mirror facets 132B. Note that in each of these cases the flat mirror surface shape produces rectangular reflective surfaces in three-dimensional space. Fig. 3(C) shows another sawtooth pattern in which mirror facets 131C have straight (flat) reflective surfaces, but the reflective surfaces of mirror facets 131C are curved (partially cylindrical) in a way that may be used to converge the incoming light. Finally, Fig. 3(D) shows another sawtooth pattern in which the reflective surfaces of mirror facets 131D are straight (flat) and the reflective surfaces of mirror facets 132D are sub-faceted to produce converging beams. Note also that the reflective surfaces of adjacent facets can both be concave to produce converging beams that avoid interference from adjacent facets. Those skilled in the art will recognize that these exemplary mirror facet shapes are exemplary, and that the appended claims are not limited to any particular shape unless that shape is specifically recited.

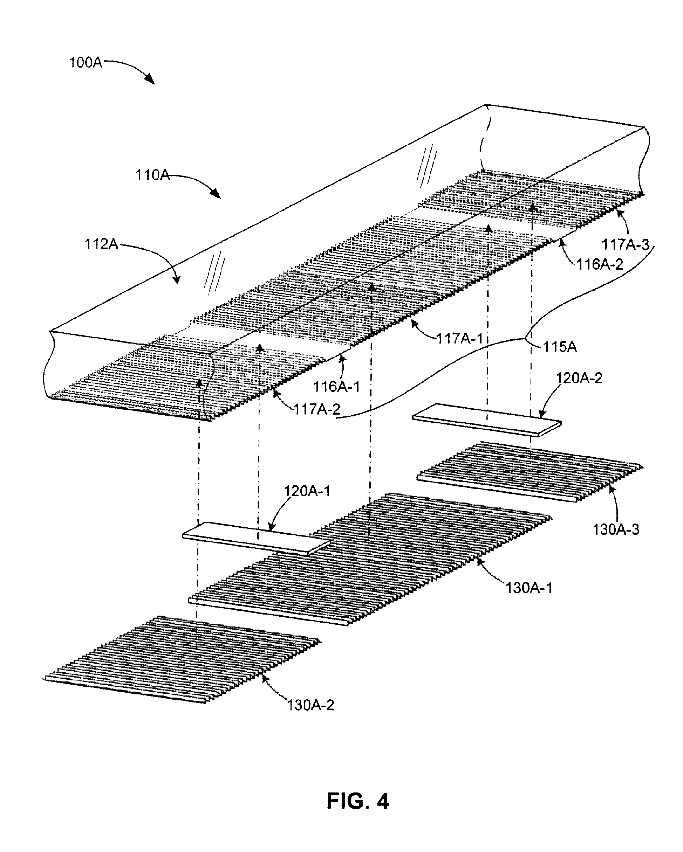

Fig. 4 is an exploded perspective view showing a concentrating solar collector 100A according to a specific embodiment of the present invention. Similar to concentrating solar collector 100 (discussed above), concentrating solar collector 100A includes an optical structure 110A, PV cells 120A-1 and 120A-2, and three micro-faceted mirror arrays 130A-1, 130A-2 and 130A-3. Optical structure 100A is solid dielectric (e.g., plastic or glass) sheet-like structure having a substantially flat front surface 112A and a rear surface 115A that is generally parallel to front surface 112A. Rear surface 115A includes planar (flat) receiver surface regions 116A-1 and 116A-2 upon which PV cells 120A-1 and 120A-2 are mounted in the manner described above. According to the present embodiment, reflective surface regions 117A-1, 117A-2 and 117A-3 are processed using known techniques to include multiple parallel micro-faceted surfaces arranged in any of the sawtooth patterns mentioned above, and micro-faceted mirror arrays 130A-1, 130A-2 and 130A-3 are fabricated by sputtering or otherwise depositing a reflective mirror material (e.g., silver (Ag) or aluminum (Al) or high efficiency multilayer dielectric reflective coatings) directly onto the parallel micro-faceted surfaces. This manufacturing technique minimizes manufacturing costs and providing superior optical characteristics. That is, by sputtering or otherwise forming a mirror film on reflective surface regions 117A-1, 117A-2 and 117A-3 using a known mirror fabrication technique, micro-faceted mirror arrays 130A-1, 130A-2 and 130A-3 take the shape of the parallel micro-faceted surfaces. As such, optical structure 110A is molded or otherwise fabricated such that reflective surface regions 117A-1, 117A-2 and 117A-3 are arranged and shaped to produce the desired mirror shapes. Note that, by forming reflective surface regions 117A-1, 117A-2 and 117A-3 and receiver surface regions 116A-1 and 116A-2 with the desired shape and position, micro-faceted mirror arrays 130A-1, 130A-2 and 130A-3 are effectively self-forming and self-aligning, thus eliminating expensive assembly and alignment costs associated with conventional concentrating solar collectors. Further, because micro-faceted mirror arrays 130A-1, 130A-2 and 130A-3, front surface 112 and PV cells 120A-1 and 120A-2 remain affixed to optical structure 110A, their relative position is permanently set, thereby eliminating the need for adjustment or realignment that may be needed in conventional multiple-part arrangements. Further, by utilizing the parallel micro-faceted surfaces of optical structure 110A to fabricate the mirrors, once light enters into optical structure 110A through front surface 112A, the light substantially remains inside optical element 110A before reaching PV cells 120A-1 or 120A-2. As such, the light is subjected to only one air/glass interface (i.e., at front surface 112A), thereby minimizing losses that are otherwise experienced by conventional multi-part concentrating solar collectors.

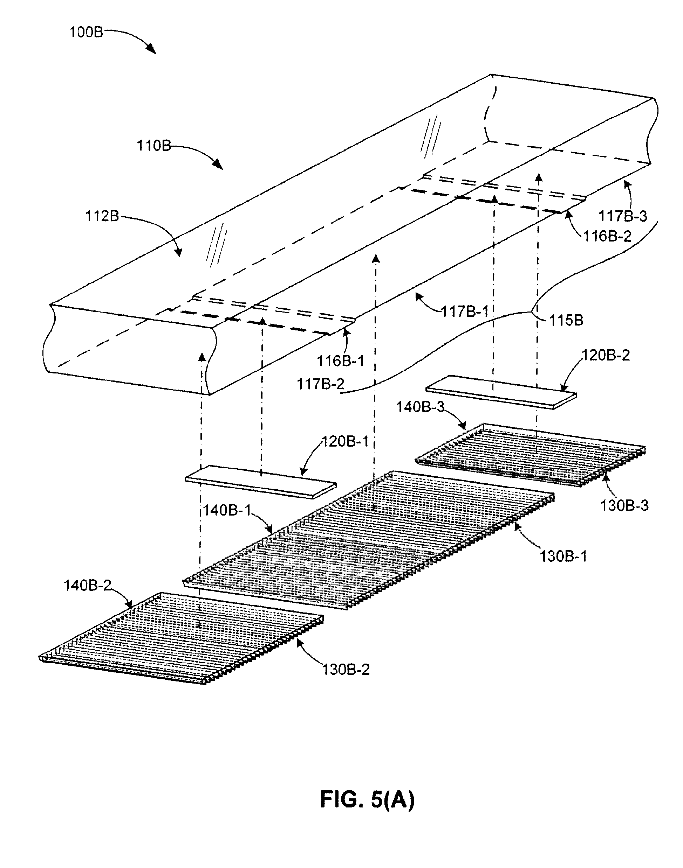

Fig. 5(A) is an exploded perspective view showing a concentrating solar collector 100B according to another specific embodiment, and includes an optical structure 110B, PV cells 120B-1 and 120B-2, and three micro-faceted mirror arrays 130B-1, 130B-2 and 130B-3 that are respectively formed on respective light transparent dielectric films 140B-1, 140B-2 and 140B-3. Optical structure 100B is solid dielectric (e.g., plastic or glass) sheet-like structure having a substantially flat front surface 112B and a rear surface 115B that is generally parallel to front surface 112B, and includes planar (flat) receiver surface regions 116B-1 and 116B-2 for receiving PV cells 120B-1 and 120B-2 in the manner described above, and reflective surface regions 117B-1, 117B-2 and 117B-3 that are also flat (planar). In this embodiment, and micro-faceted mirror arrays 130B-1, 130B-2 and 130B-3 are fabricated on light transparent dielectric films 140B-1, 140B-2 and 140B-3 using a modified version of known liquid crystal display (LCD) fabrication techniques. Once processed in this manner, dielectric films 140B-1, 140B-2 and 140B-3 are then laminated (e.g., using an adhesive) or otherwise secured to surface regions 117B-1, 117B-2 and 117B-3 on optical structure 110B. PV cells 120B-1 and 120B-2 are optically coupled directly to receiver surface regions 116B-1 and 116B-2. This production method may increase manufacturing costs over the direct mirror formation technique described above with reference to Fig. 4, and may reduce the superior optical characteristics provided by forming mirror films directly onto optical structure 110, but is some instances may provide an advantage.

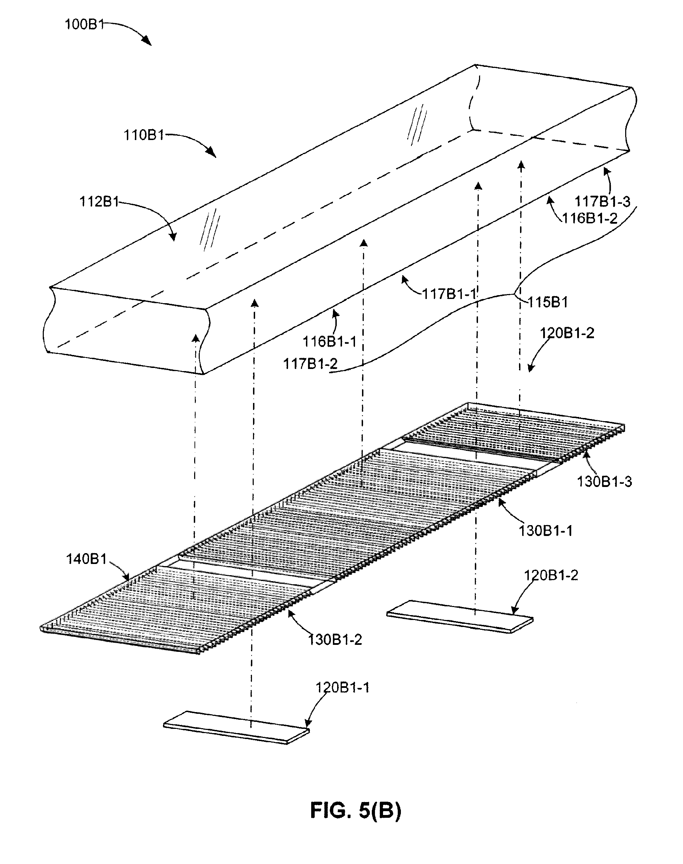

Fig. 5(B) is an exploded perspective view showing a concentrating solar collector 100B1 according to another specific embodiment. Concentrating solar collector 100B1 is similar to collector 100B (see Fig. 5(A)) in that it includes an optical structure 110B1, PV cells 120B1-1 and 120B1-2, and three micro-faceted mirror arrays 130B1-1, 130B1-2 and 130B1-3 that are formed on a single light transparent dielectric film 140B1. Optical structure 100B1 is solid dielectric (e.g., plastic or glass) sheet-like structure having a substantially flat front surface 112B1 and a rear surface 115B1 that is generally planar and parallel to front surface 112B1. As in the previous embodiment, and micro-faceted mirror arrays 130B1-1, 130B1-2 and 130B1-3 are fabricated on light transparent dielectric film 140B1 using a modified version of known liquid crystal display (LCD) fabrication techniques. Once processed in this manner, dielectric film 140B1 is laminated (e.g., using an adhesive) or otherwise secured to rear surface 115B1 on optical structure 110B1, whereby regions of rear surface 115B1 covered by mirror arrays 130B1-1, 130B1-2 and 130B1-3 serve as reflective surface regions 117B1-1, 117B1-2 and 117B1-3. PV cells 120B-1 and 120B-2 are optically coupled to dielectric film 140B and are therefore disposed on rear surface 115B1 when dielectric film 140B1 is mounted, whereby regions of rear surface 115B1 covered by PV cells 120B-1 and 120B-2 serve as receiver surface regions 116B1-1 and 116B1-2. The presently preferred construction is the thin film micro-faceted reflector sheet with a planar unstructured receiver surface laminated to a flat dielectric (plastic or glass) plate, and the PV cells attached to the receiver surface on the thin film micro-faceted reflector sheet. This production method may increase manufacturing costs over the direct mirror formation technique described above with reference to Fig. 4, and may reduce the superior optical characteristics provided by forming mirror films directly onto optical structure 110, but in some instances may provide an advantage.

Referring again to Fig. 1, micro-faceted mirror array 130-1 and PV cells 120-1 and 120-2, along with a corresponding section of optical structure 110, form a basic design unit that can be repeated any number of times to generate a concentrating solar collector having a desired number of PV cells and associated power generation. The following examples include two of these basic design units to illustrate other aspects and alternatives of the present invention. It is understood that the appended claims are not limited by the number of basic design units included in the following examples, unless such a number of basic design units is specifically recited.

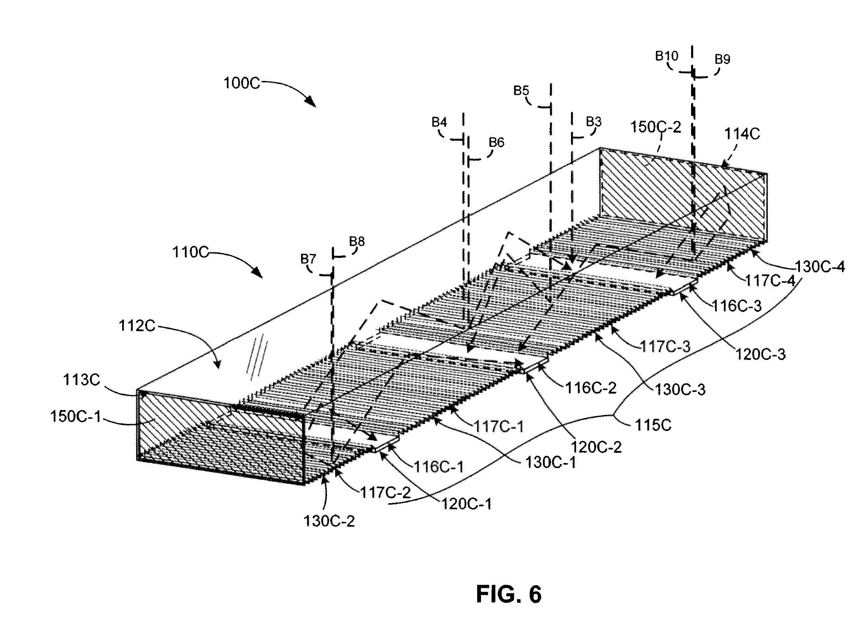

Fig. 6 is an exploded perspective view showing a concentrating solar collector 100C according to another specific embodiment that differs from earlier embodiments in that it includes an extended optical structure 110C having a flat front surface 112C and an opposing rear surface 115C that includes three planar (flat) receiver surface regions 116C-1, 116C-2 and 116C-3 for respectively receiving PV cells 120C-1, 120C-2 and 120C-3 in the manner described above, and four reflective surface regions 117C-1, 117C-2, 117C-3 and 117C-4 that are processed using the methods described above to include four micro-faceted mirror arrays 130C-1, 130C-2, 130C-3 and 130C-4.

As indicated by the vertical dashed-line arrows in Fig. 6, micro-faceted mirror arrays 130C-1 and 130C-3 function similar to the embodiments described above in that received sunlight is reflected by the micro-faceted mirrors of these arrays against front surface 112C such that the reflected sunlight is re-reflected by TIR onto one of PV cells 120C-1, 120C-2 and 120C-3. For example, micro-faceted mirror array 130C-3 is arranged such that a first sunlight beam B4 directed onto a first region of mirror array 130C-3 is reflected by an associated micro-faceted mirror and re-reflected by front surface 112C such that it is directed onto PV cell 120C-1, a second sunlight beam B5 directed onto a second region of mirror array 130C-3 is reflected by an associated micro-faceted mirror and re-reflected by front surface 112C such that it is directed onto PV cell 120C-2, and a third sunlight beam B6 directed onto a third region of mirror array 130C-3 is reflected by an associated micro-faceted mirror and re-reflected by front surface 112C such that it is directed onto PV cell 120C-3. Note that region from which light is reflected from array 130C-3 onto a PV cell 120C-1, 120C-2 and 120C-3 is determined by the angle at which light must be reflected from upper surface 112C onto that PV cell (i.e., if the region is too close to a particular PV cell, then TIR may not be achieved, and so the mirror facet must be angled to reflect light to a PV cell that is farther from the mirror facet).

Optical structure 110C also differs from the embodiments described above in that it includes a (first) flat, vertical side surface 113C extending between front surface 112C and rear surface rear surface 115C adjacent to reflective surface region 117C-2, and a (second) flat, vertical side surface 114C extending between front surface 112C and rear surface rear surface 115C adjacent to reflective surface region 117C-4. According to the present embodiment, concentrating solar collector 100C further includes a (first) flat side mirror 150C-1 disposed on side surface 113C, and a (second) flat side mirror 150C-2 disposed on side surface 114C, and micro-faceted mirror arrays 130-2 and 130-4 are arranged to reflect at least some sunlight such that it is also reflected from an associated side mirror 150C-1 or 150C-2 before being re-reflected by TIR from front surface 112C onto a selected PV cell. For example, side mirror 150-1 and micro-faceted mirror array 130C-2 are arranged such that sunlight beam B7 passing through the front surface 112C onto a leftward-leaning mirror facet of mirror array 130C-2 is reflected toward side mirror 150C-1 at an angle such that it is re-reflected by side mirror 150C-1 toward front surface 112C, and again re-reflected by TIR from front surface 112C onto PV cell 120C-1. Note that sunlight beam B7, which strikes a rightward-leaning mirror facet of mirror array 130C-2, is reflected away from side mirror 150C-1 at an angle such that it is re-reflected by TIR from front surface 112C onto PV cell 120C-2. Referring to the right side of Fig. 6, side mirror 150C-2 and micro-faceted mirror array 130C-4 are similarly arranged such that sunlight beam B9 is reflected by a rightward-leaning mirror facet of mirror array 130C-4 toward side mirror 150C-2, from which it is re-reflected toward front surface 112C, and again re-reflected by TIR from front surface 112C onto PV cell 120C-3, and sunlight beam B10, which strikes a leftward-leaning mirror facet of mirror array 130C-4, is reflected away from side mirror 150C-2 at an angle such that it is re-reflected by TIR from front surface 112C onto PV cell 120C-2. As in previous embodiments, sunlight passing directly through optical structure 100C to a PV cell is not reflected (e.g., beam B3, which is shown as being directed onto PV cell 120C-3) .

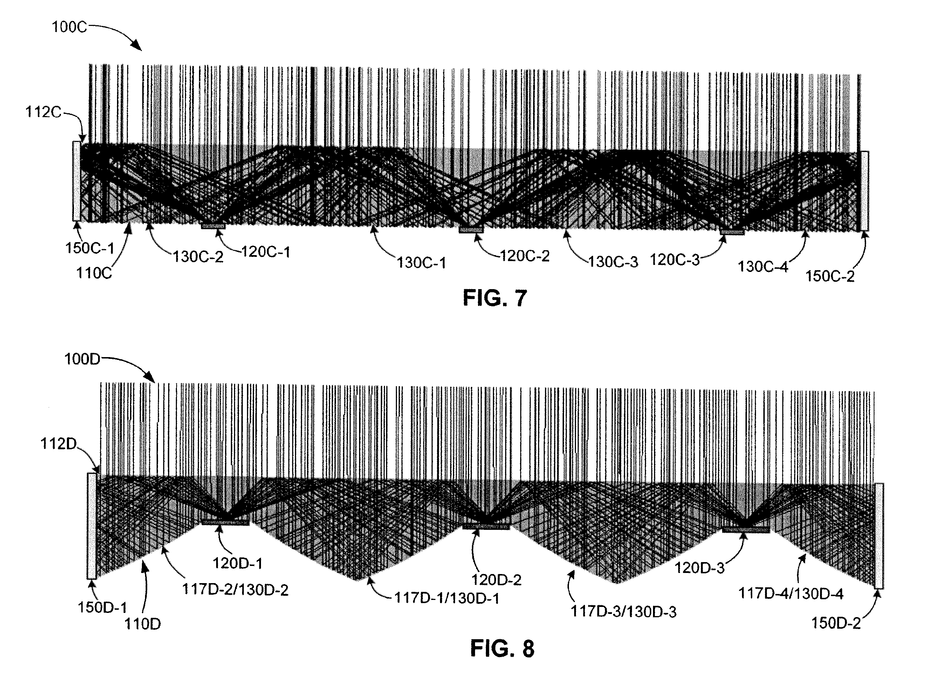

Fig. 7 is a simplified side view diagram showing concentrating solar collector 100C during operation, with the vertical lines disposed above front surface 112C representing incoming sunlight, and the angled lines inside optical structure 110C indicating the reflection pattern of light as it is directed onto one of PV cells 120C-1, 120C-2 and 120C-3 by mirror arrays 130C-1, 130C-2, 130C-3 and 130C-4 and side mirrors 150C-1 and 150C-2. As indicated in this diagram, the mirror arrangement provided by concentrating solar collector 100C minimizes the loss of light received along the outside edges of optical structure 110C, thus further enhancing efficiency.

Although the present invention has been described with respect to certain specific embodiments, it will be clear to those skilled in the art that the inventive features of the present invention are applicable to other embodiments as well, all of which are intended to fall within the scope of the present invention.

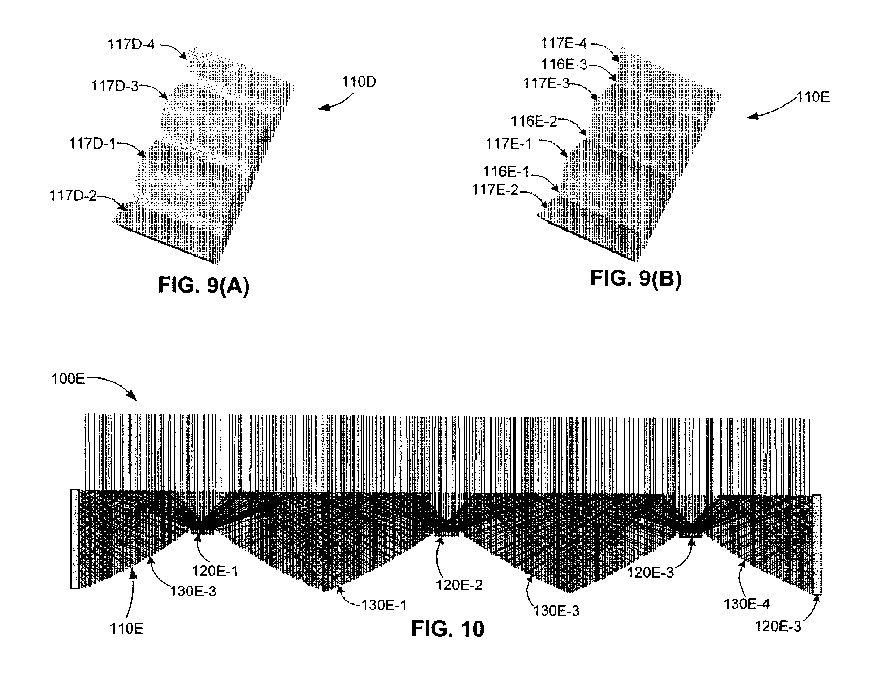

For example, although the optical structures utilized in the embodiments described above have generally flat rear surfaces, those skilled in the art will recognize that the micro-faceted mirror arrays described herein may be disposed on angled surfaces as well. Fig. 8 is simplified side view diagram similar to that in Fig. 7 showing a concentrating solar collector 100D in which an optical structure 110D includes a flat front surface 112D and an opposing lower surface 115D including a series of angled (e.g., wedge-shaped) light reflecting surface regions 117D-1 to 117D-4, with mirror arrays 130D-1, 130D-2, 130D-3 and 130D-4 respectively formed on light reflecting surface regions 117D-1 to 117D-4 in the manner described above, and side mirrors 150D-1 and 150D-2 being utilized as described above with reference to Figs. 6 and 7. Fig. 9 (A) shows optical structure 110D by itself to provide a better view of angled light reflecting surface regions 117D-1 to 117D-4.

As another example, although the optical structures utilized in the embodiments described generate concentrated light that is spread over a relatively large area PV cells, it is also possible to utilize high temperature PV cells and more highly concentrated light, thus reducing the size of the PV cell and possibly reducing costs. In such a case the optical structure would be modified, e.g., as indicated in Fig. 9 (B) to narrow the light receiving surface regions 116E-1, 116E-2 and 116E-3, thus increasing the size of light reflecting surface regions 117D-1 to 117D-4. As shown in Fig. 10, the resulting concentrating solar collector 100D would utilize smaller (i.e., narrower) PV cells 120E-1, 120E-2 and 120E-3, and mirror arrays 130E-1, 130E-2, 130E-3 and 130E-4 would be arranged to focus light onto the narrow PV cells as shown.

Other alternative embodiments involve protected TIR surfaces where TIR occurs at an interface of the front surface to the ambient, such as gas like air, where TIR occurs at an interface to an enclosed gas volume, possibly containing spacer elements, where TIR occurs at an interface between two non-gaseous media for at least some of the faceted reflectors and/or some incident elevation angles utilizing some benefit from compound angles, where one of the non-gaseous media exhibits a refractive index below 1.35, where one of the nongaseous media is from the material classes of polysiloxanes (silicones), fluorinated polymer (e.g. teflon), aqueous solution, oils, etc.

## Claims

1. A concentrating solar collector comprising:
a solid, light-transparent optical structure having a substantially flat front surface and an opposing rear surface, the rear surface including a first receiver surface region, a second receiver surface region and a first reflective surface region disposed between the first and second receiver surface regions;
a first solar energy collection element disposed on the first receiver surface region;
a second solar energy collection element disposed on the second receiver surface region; and
a first micro-faceted mirror array disposed on the first reflective surface region, the first micro-faceted mirror array including a plurality of first micro-faceted mirrors arranged such that solar radiation passing through the front surface onto said first reflective surface region is reflected by one of said first micro-faceted mirrors toward said front surface at an angle that causes said reflected solar radiation to be re-reflected by said front surface onto one of said first or second solar energy collection elements through an associated one of said first and second receiver surface regions.

2. The concentrating solar collector of claim 1, wherein the light-transparent optical structure is arranged such that solar radiation passing through the front surface onto one of said first and second receiver regions passes through said one of said first and second receiver surface regions onto one of said first or second solar energy collection elements.

3. The concentrating solar collector of claim 1 or claim 2, wherein the plurality of micro-faceted mirrors of said micro-faceted mirror array are arranged in a sawtooth pattern including:
a first group of said plurality of micro-faceted mirrors that are angled in a first angular orientation such that solar radiation is reflected by the micro-faceted mirrors of the first group in a first general direction, and
a second group of said plurality of micro-faceted mirrors that are angled in a second angular orientation such that solar radiation is reflected by the micro-faceted mirrors of the second group in a second general direction that is generally in the opposing angular half-space relative to the first direction,
wherein the sawtooth pattern is arranged such that each micro-faceted mirror of said first group shares a first common edge with a first adjacent micro-faceted mirror of said second group and a second common edge with a second adjacent micro-faceted mirror of said second group, and such that solar radiation reflected from any point on each micro-faceted mirror is not impeded by an adjacent micro-faceted mirror.

4. The concentrating solar collector of claim 3, wherein the micro-faceted mirrors of the first group are shaped and arranged such that said solar radiation reflected by the micro-faceted mirrors of the first group is directed onto said first solar energy collection element in an extended focus region of concentrated light that has a substantially uniform or homogeneous irradiance distribution pattern.

5. The concentrating solar collector of claim 3 or claim 4, wherein the micro-faceted mirrors of the first group have one of a flat, curved and sub-faceted reflective surface.

6. The concentrating solar collector of any of the preceding claims,
wherein a nominal thickness of said optical structure between the front surface and the rear surface is in the range of 1 mm and 25 mm, and
wherein a nominal width of each said first micro-faceted mirrors is in the range of 0.03 and 5 mm, and
wherein a height of each said first micro-faceted mirrors is in the range of 0.01 mm and 3 mm.

7. The concentrating solar collector of any of the preceding claims, wherein the optical element is a substantially flat solid dielectric sheet such that said rear surface is generally parallel to said front surface.

8. The concentrating solar collector of claim 7,
wherein the rear surface is substantially flat and parallel to the front surface,
wherein the micro-faceted mirror array comprises a light transparent dielectric film having said plurality of first micro-faceted mirrors mounted thereon, and
wherein said light transparent dielectric film is secured to the reflective surface region of the rear surface of said optical structure.

9. The concentrating solar collector of any of the preceding claims,
wherein the reflective surface region of the optical structure includes a plurality of micro-faceted surfaces arranged in a sawtooth pattern, and
wherein micro-faceted mirror array comprises a metal film disposed on the plurality of micro-faceted surfaces.

10. The concentrating solar collector of any of the preceding claims,
wherein the rear surface of the optical structure further includes a second reflective surface region arranged such that the first receiver surface region is disposed between the first and second reflective surface regions,
wherein the optical structure further includes a first side surface extending between the front surface and the rear surface rear surface adjacent to the second reflective surface region, and
wherein the concentrating solar collector further comprises:
a first side mirror disposed on the first side surface; and
a second micro-faceted mirror array including a plurality of second micro-faceted mirrors disposed on the second reflective surface region,
wherein the first side mirror and the second micro-faceted mirror array are arranged such that solar radiation passing through the front surface onto at least some of plurality of second micro-faceted mirrors is reflected toward said first side mirror, and is re-reflected by said first side mirror toward said front surface such that said solar radiation is redirected from said front surface by total internal reflection (TIR) onto said first solar energy collection element through said first receiver surface region.

11. The concentrating solar collector of claim 10,
wherein the rear surface of the optical structure further includes a third reflective surface region, a third receiver surface region, and a fourth reflective surface region arranged such that the second receiver surface region is disposed between the first and third reflective surface regions, and the third receiver surface region is disposed between the third and fourth reflective surface regions, and
wherein the concentrating solar collector further comprises:
a third solar energy collection element disposed on the third receiver surface region;
a third micro-faceted mirror array including a plurality of third micro-faceted mirrors disposed on the third reflective surface region;
a fourth micro-faceted mirror array including a plurality of fourth micro-faceted mirrors disposed on the fourth reflective surface region; and
wherein the third micro-faceted mirror array is arranged such that first solar radiation passing through the front surface onto a first portion of said third reflective surface region is reflected by at least some of said third micro-faceted mirrors and re-reflected by said front surface such that said first solar radiation is directed onto said first solar energy collection element through said first receiver surface region, second solar radiation passing through the front surface onto a second portion of said third reflective surface region is reflected by at least some of said third micro-faceted mirrors and re-reflected by said front surface such that said second solar radiation is directed onto said second solar energy collection element through said second receiver surface region, and third solar radiation passing through the front surface onto a third portion of said third reflective surface region is reflected by at least some of said third micro-faceted mirrors and re-reflected by said front surface such that said third solar radiation is directed onto said third solar energy collection element through said third receiver surface region.

12. The concentrating solar collector of claim 11,
wherein the optical structure further includes a second side surface extending between the front surface and the rear surface rear surface adjacent to the fourth reflective surface region,
wherein the concentrating solar collector further comprises a second side mirror disposed on the second side surface, and
wherein the second side mirror and the fourth micro-faceted mirror array are arranged such that solar radiation passing through the front surface onto at least some of plurality of fourth micro-faceted mirrors is reflected toward said second side mirror such that said solar radiation is re-reflected by said second side mirror toward said front surface at an angle that causes said solar radiation to be redirected from said front surface by total internal reflection (TIR) onto said third solar energy collection element through said third receiver surface region.

13. The concentrating solar collector of claim 12, wherein said first, second, third and fourth reflective surface regions of the rear surface are substantially parallel to the front surface.

14. The concentrating solar collector of claim 12, wherein said first, second, third and fourth reflective surface regions of the rear surface are angled with respect to the front surface.

15. The concentrating solar collector of any of the preceding claims, wherein each of the first and second solar energy collection elements comprises a photovoltaic cell.
